# EUROPÄISCHE PATENTSCHRIFT

(11) **EP 1 821 120 B1**
(45) Veröffentlichungstag und Bekanntmachung des Hinweises auf die Patenterteilung: **22.01.2014**
(21) Anmeldenummer: 07003359.2
(22) Anmeldetag: 16.02.2007
(51) Int. Cl.: G01V 8/20, G01C 3/08, G01S 17/48

(54) **Optoelektronische Vorrichtung und Verfahren zu deren Betrieb**
Opto-electronic device and method for its operation
Dispositif optoélectronique et son procédé de fonctionnement

(30) Priorität: 20.02.2006 DE 102006007764
(43) Veröffentlichungstag der Anmeldung: 22.08.2007
(73) Patentinhaber: SICK AG, 79183 Waldkirch (DE)
(72) Erfinder: Waslowski, Kai, 79312 Emmendingen (DE); Merettig Gerhard, 76350 Sexau (DE)
(74) Vertreter: Manitz, Finsterwald & Partner GbR

(56) Entgegenhaltungen:
- DE-A1-102004 009 484
- FR-A- 2 761 151

## Beschreibung

Die vorliegende Erfindung betrifft eine optoelektronische Vorrichtung zur Erfassung eines Gegenstands mittels eines Lichttasters, bei dem von einer Lichtquelle erzeugte und von einem Gegenstand rückgestreute und/oder reflektierte Lichtstrahlen nach dem Triangulationsprinzip von einer Empfangsanordnung erfasst werden und ein Gegenstandserfassungssignal ausgegeben wird, wobei die Empfangsanordnung eine Empfängeroptik zur Ablenkung der von dem Gegenstand rückgestreuten und/oder reflektierten Lichtstrahlen aufweist.

Darüber hinaus betrifft die vorliegende Erfindung Verfahren zum Betrieb einer solchen Vorrichtung.

Das Funktionsprinzip eines Triangulationslichttasters beruht darauf, dass von einer Lichtquelle ausgesandte Lichtstrahlen von einem in ihren Strahlengang gelangten Gegenstand auf einen Empfänger zurückgestreut werden, wobei der Winkel, unter dem die rückgestreuten Lichtstrahlen auf den Empfänger treffen, ein Maß für die Distanz zwischen Lichttaster und Gegenstand ist. Ein Triangulationslichttaster mit Schaltausgang erzeugt ein Gegenstandsfeststellungssignal, wenn sich ein Gegenstand innerhalb einer vorgegebenen Tastweite befindet. Ein abstandsmessender Triangulationslichttaster kann die Distanz zwischen dem Lichttaster und einem Gegenstand messen und ein der Distanz proportionales Ausgangssignal liefern.

Die Lichtquelle, die zusätzlich mit einer Sendeoptik versehen sein kann, emittiert ein idealerweise paralleles Strahlenbündel, welches bei Auftreffen auf die Oberfläche eines Gegenstandes einen Lichtfleck erzeugt, der vom Gegenstand zurückgestreut wird. Dieser Lichtfleck wird über eine zur Lichtquelle seitlich versetzt angeordnete Empfängeroptik in eine Empfängerebene abgebildet, wobei die Abbildung in der Regel unscharf erfolgt, da die Empfängerebene üblicherweise nicht in der Bildebene liegt. Abhängig von der Distanz des Gegenstandes zur Empfängeroptik treten die vom Gegenstand rückgestreuten Stahlen unter unterschiedlichen Winkeln durch die Empfängeroptik hindurch und treffen somit auch auf unterschiedliche laterale Positionen in der Empfängerebene. Aus dem Abstand des auf den Empfänger abgebildeten Lichtflecks von einem Bezugspunkt lässt sich mittels Triangulation unter Kenntnis des Abstands zwischen Empfängeroptik und Empfängerebene sowie von Lage und Richtung des von der Lichtquelle ausgesandten Strahlenbündels der Abstand des Gegenstands vom Lichttaster ermitteln.

Bei einem idealen Triangulationslichttaster wird die Empfängeroptik durch eine unendlich kleine Lochblende gebildet, da nur damit eine Detektion des Abstandes unabhängig von Störeinflüssen gewährleistet ist. Bei einem realen Triangulationslichttaster wird eine Empfängeroptik mit einer Apertur eingesetzt, deren minimale Größe durch die begrenzte Empfindlichkeit des Empfängers und durch das Signal-zu-Rausch-Verhältnis des Gesamtsystems vorgegeben ist.

Bei einem derartigen realen Lichttaster kann aber das Messergebnis verfälscht werden, wenn auf asymmetrische Weise nur ein Teil der Empfängeroptik beleuchtet wird. Dies kann beispielsweise dadurch geschehen, dass das von der Lichtquelle ausgesandte Lichtbündel auf eine in der Oberfläche des Gegenstandes vorhandene Kontrastgrenze trifft, wobei die Kontrastgrenze Bereiche mit sehr hoher und sehr niedriger Rückstreufähigkeit voneinander trennt. Dadurch verschiebt sich der gemessene Lichtfleckschwerpunkt gegenüber dem erwarteten Lichtfleckschwerpunkt in der Empfängerebene in unerwünschter Weise.

Weiterhin können von Triangulationslichttastern nur Gegenstände mit ideal streuenden Oberflächen wirklich zuverlässig detektiert werden, d.h. der Gegenstand soll einen einfallenden Lichtstrahl gleichmäßig diffus in einen gewissen Raumwinkel zurückstreuen. Reale Oberflächen sind allerdings selten ausschließlich lichtstreuend, in der Regel wird zumindest ein Teil des einfallenden Lichts reflektiert.

Ein vom Gegenstand reflektierter Lichtstrahl leuchtet die Empfängeroptik im Gegensatz zu einem zurückgestreuten Lichtstrahl in der Regel nur teilweise aus. Trifft das reflektierte Strahlenbündel nicht im Bereich der optischen Achse auf die Empfängeroptik, wird durch die reflektierten Strahlen ein Lichtfleck erzeugt, dessen Position von der Position des durch die zurückgestreuten Strahlen erzeugten Lichtflecks verschieden ist. Da die reflektierten Strahlen in der Regel eine höhere Intensität als die rückgestreuten Strahlen aufweisen, kann es abhängig vom Winkel der Gegenstandsoberfläche zur Strahlrichtung der von der Lichtquelle ausgesandten Lichtstrahlen zu einer Fehldetektion kommen.

Die DE 10 2004 009 484 A1 offenbart einen optischen Abstandshalter nach dem Triangulationsprinzip mit einer einem Empfänger zugeordneten Linse, welche eine erste und eine zweite Hauptfläche aufweist, wobei die zweite Hauptfläche in mehrere Zylindersegmente unterteilt ist.

Aufgabe der vorliegenden Erfindung ist es daher, eine Vorrichtung zur zuverlässigeren Erfassung eines Gegenstandes und Verfahren zum Betrieb einer solchen Vorrichtung zu schaffen.

Die Aufgabe der Erfindung wird durch eine optoelektronische Vorrichtung nach Anspruch 1 gelöst.

Gegenüber herkömmlichen Triangulationslichttastern kann mit der erfindungsgemäßen Anordnung ein Gegenstandserfassungssignal nicht nur aus der Position eines vom erfassten Gegenstand erzeugten Lichtflecks auf dem Empfänger bestimmt werden. Vielmehr ist es möglich, eine Abstandsinformation aus der Empfängssignalverteilung innerhalb eines oder mehrer Makropixel zu gewinnen. Durch das Mikrolinsenarray kann die Information zur Durchführung einer Triangulation nämlich nicht nur in der Absolutposition eines Lichtfleckabbildes auf dem Empfänger gewonnen werden, sondern auch aus den in jedem beleuchteten Makropixel vorhandenen Zusatzinformationen über den Auftreffwinkel der Empfangsstrahlen auf die Empfangsanordnung und/oder über Asymmetrien in der Ausleuchtung der Empfängeroptik, wie nachfolgend noch näher erklärt wird.

Somit ergeben sich durch die erfindungsgemäße Vorrichtung Möglichkeiten, die eingangs beschriebenen Artefakte, die das Ergebnis der Gegenstandserfassung verfälschen können, zu vermeiden und/oder sie zu quantifizieren und ggf. für eine Korrektur des Ergebnisses zu verwenden.

Bei einer vorteilhaften Ausführungsform kann das Pixelarray zeilenförmig sein. Diese Anordnung stellt eine kostengünstige Lösung dar, wenn lediglich eine geringere Erfassungsgenauigkeit oder -empfindlichkeit benötigt wird.

Bei einer ebenfalls bevorzugten Ausführungsform kann das Pixelarray die Form eines zweidimensionalen Arrays aufweisen. Mit einem zweidimensionalen Array lassen sich gegenüber einem zeilenförmigen Pixelarray auch Asymmetrien in einer zweiten lateralen Richtung nachweisen.

Bevorzugt kann das Pixelarray ein CCD-Sensor, ein CMOS-Sensor oder eine Anordnung von PIN-Dioden sein.

Vorteilhaft ist, wenn die Lichtquelle ein Laser oder eine LED ist. Bei Verwendung eines Lasers braucht in der Regel keine zusätzliche Sendeoptik vorgesehen werden. Ferner sind Laser oder LEDs verfügbar, die Licht im Infrarotbereich emittieren, so dass sich hierdurch Lichttaster realisieren lassen, die weitgehend unempfindlich gegenüber etwaigem sichtbarem Störlicht sind.

Gemäß einer bevorzugten Ausführungsform der Erfindung sind die Brennweiten und/oder die Aperturen der Empfängeroptik und der Mikrolinsen derart gewählt, dass zumindest die von einem innerhalb eines Erfassungsbereichs angeordneten Gegenstand rückgestreuten Lichtstrahlen, welche die Empfängeroptik vollständig ausleuchten, von mehreren benachbarten Mikrolinsen ablenkbar sind und jeweils innerhalb der diesen Mikrolinsen zugeordneten Makropixel auf einen insbesondere mehrere einzelne Subpixel umfassenden Teilbereich des jeweiligen Makropixels fokussierbar oder umlenkbar sind. Unter dem Begriff "fokussieren" im Sinne dieser Erfindung ist grundsätzlich auch ein reines Ablenken von Lichtstrahlen ohne exakte Fokussierung auf einen Punkt zu verstehen.

Bei dieser Ausführungsform sind also die Brennweiten und/oder die Aperturen so bemessen, dass ein durch die Lichtquelle auf dem Gegenstand erzeugter Lichtfleck annähernd nur auf jeweils einen Teilbereich der betroffenen Makropixel abgebildet wird, welcher idealerweise ein bis drei Subpixel umfasst, so dass Information über den Auftreffwinkel der Empfangsstrahlen auf die Empfangsanordnung auch in der Position des oder der durch die fokussierten Empfangsstrahlen beaufschlagten Subpixel bzw. in der Position eines Charakteristikums der Empfangssignalverteilung innerhalb der betroffenen Makropixel gegeben ist.

Hierzu ist anzumerken, dass eine exakte Abbildung auf ein einzelnes Subpixel eines Makropixels nur für einen bestimmten Abstand des Gegenstandes von der Empfangsanordnung gegeben ist. Ein größerer oder kleinerer Abstand wird aufgrund der begrenzten Tiefenschärfe zu einer gewissen Unschärfe der Abbildung des Lichtflecks führen, wobei jedoch stets eine Position der Abbildung des Lichtflecks bzw. seines Schwerpunkts innerhalb des Makropixels bestimmbar ist.

Bevorzugt ist jeweils einem Subpixel oder der Position eines Charakteristikums der Empfangssignalverteilung über die Subpixel eines Makropixels, welches oder welche durch von einem in einem vorgegebenen Abstand angeordneten Gegenstand rückgestreute und/oder reflektierte Lichtstrahlen beaufschlagbar ist, ein entsprechender Abstandswert zugeordnet. Demnach ist es möglich, aus der Beaufschlagung eines bestimmten Subpixels mit Licht bzw. aus der Position des Charakteristikums der genannten Empfangssignalverteilung auf einen sich in dem zugeordneten Abstand befindenden Gegenstand zu schließen.

Es ist vorteilhaft, wenn jeweils mehrere Subpixel des Pixelarrays, denen ein gleicher Abstandswert zugeordnet ist, zu einem Metapixel zusammengefasst sind, und/oder jeweils mehrere Subpixel des Pixelarrays, denen ein gleicher Abstandsbereich zugeordnet ist, zu einem Metapixel zusammengefasst sind.

Somit wird ein derartiges Metapixel immer dann erregt, wenn Licht von einem sich im entsprechenden Abstand oder Abstandsbereich befindenden Gegenstand auf die Empfangsanordnung trifft. Dabei wird ein Metapixel auch dann erregt, wenn nur ein Teil der diesem Metapixel zugeordneten Subpixel beaufschlagt wird, d.h. wenn z.B. der Gegenstand keine ideal rückstreuende Oberfläche aufweist.

Weiterhin ist es vorteilhaft, wenn mehrere Metapixel vorgesehen sind, denen jeweils unterschiedliche Abstandswerte und/oder Abstandsbereiche zugeordnet sind. Somit können auch sich in unterschiedlichen Bereichen befindende Gegenstände durch die Auswertung der Metapixel erfasst werden.

Gemäß einer bevorzugten Ausführungsform sind die Subpixel fest verschaltet.

Alternativ können die Subpixel veränderbar verschaltet sein. Beispielsweise ist es bei einer veränderbaren Verschaltung möglich, die Bemessung der Abstandsbereiche in Abhängigkeit von der konkreten Anwendungssituation vornehmen zu können.

Die Aufgabe der Erfindung wird weiterhin durch ein Verfahren nach Anspruch 10 gelöst, welches eine erste Verfahrensvariante darstellt.

Erfindungsgemäß ist es also möglich, zur Gegenstandserfassung sowohl eine Signalverteilung über die Makropixel zu verwenden, was im Prinzip einem herkömmlichen Triangulationslichttaster entspricht, als auch die Empfangssignalverteilung über die Subpixel eines Makropixels und/oder die Empfangssignalverteilung über die Metapixel zu berücksichtigen. Die Vorzüge liegen also darin, die verschiedenen Empfangssignalverteilungen je nach Bedarf einzeln oder in Kombination miteinander auszuwerten.

Gemäß einer vorteilhaften Ausführungsvariante der Erfindung wird ein in Abhängigkeit von der Empfangssignalverteilung über die Makropixel bestimmtes Gegenstandserfassungssignal aufgrund der Empfangssignalverteilung über die Subpixel wenigstens eines Makropixels korrigiert.

Bei dieser Variante wird zunächst die Empfangssignalverteilung über die Makropixel bestimmt und daraus der Abstand des Gegenstandes ermittelt. Zusätzlich erfolgt eine Bestimmung der Empfangssignalverteilung über die Subpixel eines oder mehrerer Makropixel, aus der ebenfalls ein Abstandswert, ggf. durch Mittelung über mehrere Abstandswerte, ermittelt wird. Insbesondere kann bei der Abstandsbestimmung über die Subpixel das Makropixel mit der höchsten Intensität ausschließlich oder mit einer höheren Gewichtung berücksichtigt werden. Falls beide Auswertungen nicht zum gleichen Abstandswert führen, kann der aus der Empfangssignalverteilung über die Makropixel bestimmte Abstandswert durch den aus der Empfangssignalverteilung über die Subpixel wenigstens eines Makropixels bestimmten Abstandswert, der in diesem Fall dann mit hoher Wahrscheinlichkeit korrekter ist, ersetzt werden.

Bei einer weiteren Ausführungsvariante der Erfindung wird ein in Abhängigkeit von der Empfangssignalverteilung über die Makropixel bestimmtes Gegenstandserfassungssignal aufgrund der Empfangssignalverteilung über die Metapixel korrigiert.

Auch bei dieser Variante wird zunächst die Empfangssignalverteilung über die Makropixel bestimmt und daraus der Abstand des Gegenstandes ermittelt. Zusätzlich erfolgt eine Bestimmung der Empfangssignalverteilung über die Metapixel, aus der ein weiterer Abstandswert ermittelt wird. Ähnlich der vorstehend beschriebenen Variante kann der aus der Empfangssignalverteilung über die Makropixel bestimmte Abstandswert durch den aus der Empfangssignalverteilung über die Metapixel bestimmten Abstandswert ersetzt werden, falls beide Auswertungen nicht zum gleichen Abstandswert führen.

Bei den beiden vorstehend genannten Verfahrensvarianten kann also zunächst ein Gegenstandserfassungssignal aufgrund der Empfangssignalverteilung über die Makropixel bestimmt werden und unter Berücksichtigung der Empfangssignalverteilung über die Subpixel und/oder die Metapixel gegebenenfalls korrigiert werden. Hierdurch kann eine beispielsweise durch ungleichmäßige Ausleuchtung der Empfängeroptik verursachte Fehlbestimmung durch Abgleich mit der Empfangssignalverteilung über die Subpixel und/oder die Metapixel vermieden werden.

Gemäß einer vorteilhaften Weiterbildung der Erfindung wird das Gegenstandserfassungssignal nur in Abhängigkeit von der Empfangssignalverteilung über eine Mehrzahl von zur Gegenstandserfassung herangezogenen Metapixeln erzeugt. Bei dieser Verfahrensvariante wird also auf die Bestimmung der Empfangssignalverteilung über die Makropixel und über die Subpixel wenigstens eines Makropixels verzichtet und ausschließlich die Empfangssignalverteilung über die Metapixel berücksichtigt.

Ebenso ist es möglich das Gegenstandserfassungssignal nur in Abhängigkeit von der Empfangssignalverteilung über die Subpixel der Makropixel erzeugt. Bei dieser Verfahrensvariante wird also auf die Bestimmung der Empfangssignalverteilung über die Makropixel und über die Metapixel verzichtet und ausschließlich die Empfangssignalverteilung über die Subpixel berücksichtigt.

Bevorzugt wird das Gegenstandserfassungssignal in Abhängigkeit von der Position eines Charakteristikums der Empfangssignalverteilung erzeugt und/oder korrigiert.

Unter Empfangssignalverteilung im Sinne dieser Erfindung wird bei allen Erfindungsvarianten generell auch bereits die reine Ermittlung der Position des Schwerpunkts oder des Maximums des Empfangssignals innerhalb der Metapixel, der Makropixel oder der Subpixel eines Makropixels verstanden.

Bei einer vorteilhaften Verfahrensvariante wird das Gegenstandserfassungssignal als binäres Ausgangssignal aufgrund eines sich innerhalb einer vorgegebenen Tastweite befindenden Gegenstands erzeugt. Hierdurch wird ein schaltender Triangulationslichttaster verwirklicht.

Bei einer vorteilhaften Weiterbildung dieser Verfahrensvariante ist das binäre Ausgangssignal eine Funktion der Position eines Charakteristikums der Empfangssignalverteilung über die Metapixel. Es wird also zunächst die Empfangssignalverteilung über die Metapixel bestimmt und anschließend aufgrund der Position des Charakteristikums dieser Verteilung eine Entscheidung getroffen, welcher der beiden Ausgangssignalzustände des binären Ausgangssignals auszugeben ist.

Alternativ können zwei zueinander komplementäre Abstände und/ oder Abstandsbereiche jeweils einem von zwei Metapixeln zugeordnet sein, wobei das dann lediglich binäre Ausgangssignal einen Zustand in Abhängigkeit von dem jeweils am stärksten beaufschlagten Metapixel annimmt. Bei dieser Variante eines schaltenden Lichttasters ist eine einfache Erzeugung des Ausgangssignals mit kurzen Schaltzeiten möglich.

Gemäß einer weiteren vorteilhaften Fortbildung der Erfindung wird das Gegenstandserfassungssignal als analoges und/ oder digitales Abstandssignal erzeugt, welches ein Maß für den Abstand des Gegenstandes von der Empfangsanordnung und/oder der Lichtquelle ist und eine Funktion der Position eines Charakteristikums der Empfangssignalverteilung ist. Diese Anordnung stellt einen messenden Triangulationslichttaster dar.

Die Aufgabe der Erfindung wird ferner durch ein Verfahren nach Anspruch 19 gelöst, welches eine zweite Verfahrensvariante darstellt.

Unter einer symmetrischen Signalverteilung ist eine bezüglich einer Symmetrieachse symmetrische Empfangssignalverteilung zu verstehen, wobei die Symmetrieachse sowohl mittig als auch außermittig in Bezug auf das jeweilige Makropixel verlaufen kann.

Bei dem genannten Verfahren kann also eine beispielsweise durch Detektion von reflektierten Lichtstrahlen entstandene Asymmetrie erkannt werden, da die Subpixel innerhalb eines Makropixels nur dann eine symmetrische Signalverteilung aufweisen, wenn die Empfangsanordnung bzw. ihre Apertur im Wesentlichen homogen beleuchtet wird, was dann zu einer Ausleuchtung eines Bereichs des Pixelarrays führt, der zumindest die Ausdehnung eines Makropixels aufweist.

Wird beispielsweise nur ein Randbereich der Apertur der Empfangsanordnung ausgeleuchtet, oder wird dieser Randbereich stärker als die übrige Apertur ausgeleuchtet, weist die Signalverteilung innerhalb eines Makropixels eine Asymmetrie auf, d.h. bestimmte Randbereiche eines Makropixels sind z.B. gegenüber anderen Randbereichen stärker ausgeleuchtet worden.

Erfindungsgemäß werden dementsprechend also nur Makropixel mit einer im Wesentlichen symmetrischen Signalverteilung über die einzelnen Subpixel des jeweiligen Makropixels herangezogen. Signale von Makropixeln, bei denen z.B. infolge von unerwünschten Reflexionen eine asymmetrische Signalverteilung über die Subpixel festgestellt wurde, werden entweder gar nicht oder nach einer Korrektur entsprechend der Höhe der festgestellten Asymmetrie bei der Auswertung berücksichtigt. Auf diese Weise wird erreicht, dass nur solche "gültige" Makropixel im Rahmen der Auswertung der empfangenen Lichtsignale berücksichtigt werden, die entweder zu einem ganz wesentlichen Teil über streuende Gegenstandsoberflächen beleuchtet werden oder deren Signale auf geeignete Weise korrigiert wurden. Ein derartiges Korrekturverfahren wird nachstehend noch näher beschrieben.

Die Feststellung eines "gültigen" Makropixels kann auch dadurch erfolgen, das die ermittelte Empfangssignalverteilung über die Subpixel eines Makropixels mit einer zuvor hinterlegten Referenzsignalverteilung über die Subpixel dieses Makropixels verglichen wird, die sich bei vorgegebenen Abständen einstellt. Die Referenzsignalverteilung kann sowohl berechnet werden als auch während eines Einlernvorgangs ermittelt werden.

Eine ungültiges Makropixel liegt dann vor, wenn beim Vergleich mit der diesem Makropixel zugeordneten Referenzsignalverteilung eine ausreichend große, beispielsweise oberhalb eines gegebenen Schwellwerts liegende Abweichung festgestellt wird.

Bei einer bevorzugten Variante des Verfahrens kann das Gegenstandserfassungssignal aufgrund einer Signalverteilung über eine Mehrzahl von zur Gegenstandserfassung herangezogenen "gültigen" Makropixeln bestimmt werden, wobei ein Signal jeweils eines "gültigen" Makropixels durch Summenbildung über dessen Subpixel ermittelt wird. Nachdem also eine Entscheidung über die zu berücksichtigenden und somit "gültigen" Makropixel getroffen wurde, wird eine Signalverteilung über die Summensignale dieser Makropixel ermittelt.

Bevorzugt kann das Gegenstandserfassungssignal aus der Position eines Charakteristikums der Signalverteilung innerhalb des Pixelarrays erzeugt werden, wobei die Signalverteilung aus einer Mehrzahl von zur Gegenstandserfassung herangezogenen "gültigen" Makropixeln ermittelt wird. Aus dem Abstand des Charakteristikums der Signalverteilung zu einem Bezugspunkt lässt sich der Abstand des Gegenstandes von der erfindungsgemäßen Vorrichtung bestimmen.

Vorteilhaft ist, wenn das Gegenstandserfassungssignal in Abhängigkeit von der Position des geometrischen Schwerpunkts oder des Maximums der Signalverteilung erzeugt wird.

Bei Erkennen einer asymmetrischen Signalverteilung innerhalb eines Makropixels kann alternativ zu einer Nichtberücksichtigung derartiger Makropixel eine Korrektur z.B. durch eine korrigierte Bestimmung des Schwerpunktes der Signalverteilung über die Makropixel erfolgen.

Zur Berechnung des korrigierten Schwerpunktes wird ein eine asymmetrische Signalverteilung aufweisendes Makropixel mit einer korrigierten Ortskoordinate gewichtet, wobei die Differenz zwischen originaler und korrigierter Ortskoordinate proportional zur asymmetriebedingten Verschiebung des Schwerpunkts der Signalverteilung über die Subpixel dieses Makropixels ist. Der Proportionalitätsfaktor lässt sich für jedes Pixel entweder experimentell bestimmen oder aus den geometrischen Verhältnissen der Lichttasteranordung berechnen. Die ermittelten Werte können in einer Tabelle abgelegt sein und im Betrieb des Lichttasters zur Berechnung der korrigierten Ortskoordinaten herangezogen werden.

Allgemein wird der Schwerpunkt *p* der Signalverteilung über die Makropixel berechnet als die Summe über alle mit der entsprechenden Makropixelkoordinate *xᵢ* multiplizierten Summensignale *Sᵢ* jedes Makropixels (Summen der Signale aller Subpixel eines Makropixels) dividiert durch die Summe über alle Summensignale *Sᵢ,* wobei das Summensignal *Sᵢ* als Summe über die Signale aller zu einem Makropixel *i* gehörenden Subpixel gebildet wird. Die Korrektur erfolgt auf folgende Weise:

Der Schwerpunkt *qᵢ* der Signalverteilung innerhalb eines Makropixels *i* wird auf entsprechende Weise berechnet. Durch Normierung auf die Anzahl *m* der Subpixel innerhalb eines Makropixels wird ein Verschiebungsfaktor *v*ᵢ bestimmt, der Werte zwischen -1 und +1 annehmen kann. Bei Vorliegen einer symmetrischen Signalverteilung in einem Makropixel ist demnach *v*ᵢ gleich 0.

Weiterhin wird für jedes Makropixel *i* ein Korrekturwert *DXᵢ* bestimmt, der angibt, um wie viele Pixelpositionen die Position eines durch reflektierte Lichtstrahlen erzeugten Lichtflecks von der Position eines durch zurückgestreute Lichtstrahlen erzeugten Lichtflecks maximal verschieden ist, wenn beide Lichtstrahlen vom gleichen Ort ausgehen.

Der Korrekturwert *DX*ᵢ kann beispielsweise experimentell ermittelt werden, indem zunächst die Position *pᵢ* des durch einen rückstreuenden Gegenstands erzeugten Lichtflecks ermittelt wird und anschließend der rückstreuende Gegenstand durch einen am gleichen Ort angeordneten reflektierenden Gegenstand ersetzt wird. Dessen Winkelausrichtung wird so variiert, dass die reflektierten Lichtstrahlen die Empfängerapertur in einem Randbereich passieren. Die zugehörige neue Position *puᵢ* des Schwerpunkts des Lichtflecks wird entsprechend bestimmt.

Nun wird aus der Signalverteilung innerhalb des Makropixels, auf den die neue Position *puᵢ* nun fällt, der zugehörige Verschiebungsfaktor *v(pu)ᵢ* analog zur Bestimmung des Verschiebungsfaktors *vᵢ* ermittelt. Der Korrekturwert *DXᵢ* berechnet sich aus der durch *v(pu)ᵢ* geteilten Differenz zwischen *puᵢ* und *pᵢ.*

Die Korrekturwerte *DXᵢ* werden für alle Makropixel *i* tabelliert. Aufgrund der unsymmetrischen Abbildungsgeometrie eines Triangulationslichttasters ist es sinnvoll, *DXᵢ* jeweils für den einen Randbereich und einen diesem gegenüberliegenden Randbereich der Empfängerapertur, d.h. für positive und negative Vorzeichen von *vᵢ*, getrennt zu ermitteln.

Neben der hier beschriebenen Methode ist auch eine Berechnung von *DXᵢ* gemäß den Regeln der geometrischen Optik oder durch rechnergestützte Simulation möglich.

Im Betrieb wird nun bei Vorliegen einer asymmetrischen Signalverteilung zur Ermittlung eines korrigierten Schwerpunktes *p*' analog zur oben beschriebenen Berechnung anstatt der Pixelkoordinate *xᵢ* eine korrigierte Pixelkoordinate *x'*ᵢ herangezogen, die aus *xᵢ* durch Addition des Produkts aus dem aus der Tabelle abgelesenen Korrekturwert *DXᵢ* und dem Korrekturfaktor *vᵢ* hervorgeht.

Weiterhin bevorzugt kann das Gegenstandserfassungssignal als binäres Ausgangssignal aufgrund eines sich innerhalb einer vorgegebenen Tastweite befindenden Gegenstands erzeugt werden, wobei das Ausgangssignal eine Funktion der Position eines Charakteristikums der Signalverteilung innerhalb des Pixelarrays ist. Es wird dabei z.B. ein bestimmter Signalzustand ausgegeben, wenn sich der Gegenstand in einem bestimmten Abstand oder innerhalb eines vorgegebenen Abstandsbereichs zum Lichttaster befindet. Befindet sich kein Gegenstand innerhalb des vorgegebenen Abstands, wird der hierzu komplementäre Signalzustand ausgegeben.

Bei einer vorteilhaften Variante kann das Gegenstandserfassungssignal als analoges und/oder digitales Abstandssignal aufgrund eines erfassten Gegenstands erzeugt werden, wobei die Größe des Abstandssignals ein Maß für den Abstand des Gegenstands von der Empfangsanordnung und/ oder der Lichtquelle ist und eine Funktion der Position eines Charakteristikums der Signalverteilung innerhalb des Pixelarrays ist. Ein derartiges Verfahren ist also zur Abstandsmessung geeignet, da das ausgegebene Erfassungssignal Information über den Abstand enthält.

Bevorzugt ist, wenn das Gegenstandserfassungssignal bei Erkennen zumindest eines Makropixels mit einer im Wesentlichen asymmetrischen Signalverteilung über die Subpixel seinen letzten Wert unmittelbar vor diesem Erkennen behält, so dass in diesem Fall also keine Aktualisierung des Gegenstandserfassungssignals erfolgt. Hierdurch wird erreicht, dass ein kurzzeitiges Detektieren von reflektierten Lichtstrahlen nicht zu einem fehlerhaften Gegenstandserfassungssignal führt.

Weitere bevorzugte Ausführungsformen der Erfindung sind den abhängigen Ansprüchen, der Beschreibung sowie den Zeichnungen zu entnehmen.

Die Erfindung wird nachfolgend anhand eines Ausführungsbeispiels unter Bezugnahme auf die Zeichnungen erläutert. In diesen zeigen
- Fig. 1: eine schematische Darstellung eines gemäß der zweiten Verfahrensvariante arbeitenden Triangulationslichttasters mit einem ausschließlich rückstreuenden Gegenstand in zwei verschiedenen Abständen,
- Fig. 2: eine schematische Darstellung eines gemäß der zweiten Verfahrensvariante arbeitenden Triangulationslichttasters mit einem sowohl rückstreuenden als auch reflektierenden Gegenstand,
- Fig. 3a und 3b: schematische Teildarstellungen eines gemäß der ersten Verfahrensvariante arbeitenden Triangulationslichttasters, und
- Fig. 4a und b: schematische Schaltbilder eines gemäß der ersten Verfahrensvariante arbeitenden Triangulationslichttasters.

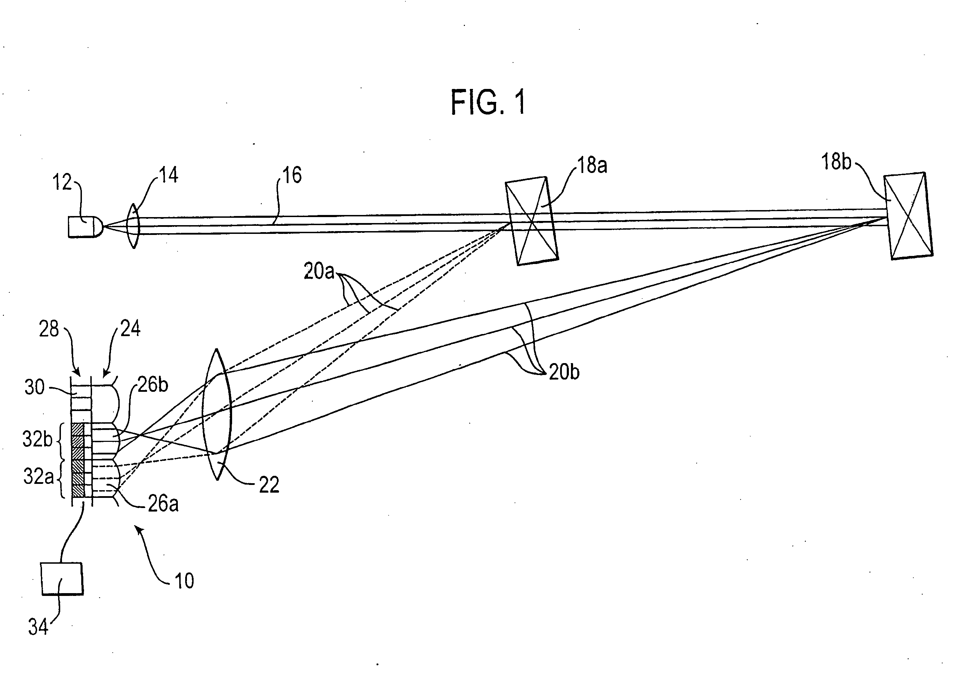

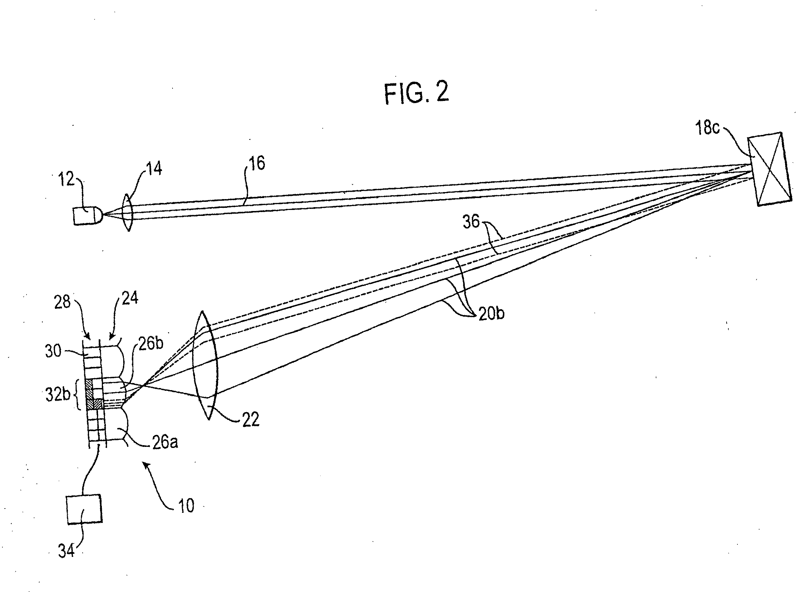

Zunächst wird anhand von den Fig. 1 und 2 das Verfahren gemäß den Ansprüchen 19 bis 24 (zweite Verfahrensvariante) erläutert, wobei die grundsätzliche dargestellte apparative Anordnung auch für das Verfahren gemäß den Ansprüchen 10 bis 18 (erste Verfahrensvariante) zur Anwendung kommen kann.

Fig. 1 zeigt schematisch einen Triangulationslichttaster 10, dessen einzelne Komponenten zum besseren Verständnis der Funktionsweise nicht maßstäblich und teilweise nur ausschnittsweise dargestellt sind. Die Komponenten können separat angeordnet oder in einem in der Figur nicht dargestellten gemeinsamen Gehäuse zusammengefasst sein.

Eine Lichtquelle 12 emittiert divergente Lichtstrahlen, die mittels einer Sendeoptik 14 zu einem annähernd parallelen Strahlenbündel 16 abgelenkt werden.

Sie treffen auf einen ersten Gegenstand 18a und werden von diesem zurückgestreut. Die in Fig. 1 exemplarisch mittels gestrichelter Linien dargestellten, von einem Punkt auf der Oberfläche des Gegenstands 18a in einen Raumwinkel rückgestreuten Strahlen 20a treffen auf eine gegenüber der Lichtquelle 12 seitlich versetzt angeordnete Empfängeroptik 22 und fallen gebündelt auf ein hier nur ausschnittsweise dargestelltes Mikrolinsenarray 24, welches von der Empfängeroptik 22 etwas weiter als der zum dargestellten Strahlengang gehörende Bildpunkt beabstandet ist.

Der so entstandene Bildfleck leuchtet annähernd eine erste Mikrolinse 26a des Mikrolinsenarrays 24 aus, die wiederum die rückgestreuten Strahlen 20a auf einen unmittelbar hinter dem Mikrolinsenarray 24 angeordneten, ebenfalls nur ausschnittsweise dargestellten Empfänger 28 lenkt. Der Empfänger 28 besteht aus einem Pixelarray, welches eine Mehrzahl von Subpixeln 30 aufweist, wobei jeweils drei benachbarte Subpixel 30 zu einem Makropixel 32a, 32b zusammengefasst sind.

Das Makropixel 32a ist dabei der Mikrolinse 26a zugeordnet und kann die von ihr abgelenkten Strahlen empfangen. Entsprechend ist das Makropixel 32b der benachbarten Mikrolinse 26b zugeordnet. Die rückgestreuten Strahlen 20a erzeugen in den Subpixeln 30 des Makropixels 32a ein Signal, dessen Höhe durch die Größe der in den Subpixeln 30 schraffierten Flächen angegeben ist.

Bei Entfernen des ersten Gegenstands 18a trifft das von der Lichtquelle 12 ausgesandte Strahlenbündel 16 auf einen zweiten Gegenstand 18b und erzeugt als durchgezogene Linien dargestellte, rückgestreute Strahlen 20b, die ebenfalls auf die Empfängeroptik 22 treffen. Diese fallen jedoch aufgrund des unterschiedlichen Abstands der beiden Gegenstände 18a, 18b unter einem anderen Winkel auf die Empfängeroptik 22 und daher auf eine der ersten Mikrolinse 26a benachbarte zweite Mikrolinse 26b. Diese lenkt die rückgestreuten Strahlen 20b auf ein dem ersten Makropixel 32a benachbartes zweites Makropixel 32b ab.

Sowohl bei Rückstreuung durch den ersten als auch durch den zweiten Gegenstand 18a, 18b ergibt sich aufgrund der lichtstreuenden Eigenschaften der Oberflächen der Gegenstände 18a, 18b eine symmetrische Ausleuchtung der Subpixel 30 der Makropixel 32a bzw. 32b, was gemäß Fig. 1 durch die untereinander gleichen Größen der schraffierten Flächen der betreffenden Subpixel 30 veranschaulicht ist.

Die in Fig. 2 dargestellte Anordnung entspricht im Wesentlichen derjenigen von Fig. 1, wobei sich an der Stelle des in Fig. 1 dargestellten Gegenstandes 18b ein Gegenstand 18c befindet, dessen Oberfläche das Strahlenbündel 16 nicht nur zurückstreut sondern auch reflektiert.

Die als durchgezogene Linie dargestellten rückgestreuten Strahlen 20c werden wie in Fig. 1 durch die Empfängeroptik 22 und die Mikrolinse 26b auf das Makropixel 32b abgelenkt und führen zu einer symmetrischen Ausleuchtung der Subpixel 30 des Makropixels 32b.

Die vom Gegenstand 18c reflektierten Strahlen 36 sind in Fig. 2 als gestrichelte Linien dargestellt und breiten sich im Gegensatz zu den rückgestreuten Strahlen 20c unter der Annahme einer weitgehend ebenen Gegenstandsoberfläche als paralleles Strahlenbündel aus, dessen Durchmesser dem des einfallenden Strahlenbündels 16 entspricht.

Da durch den geringeren Durchmesser des reflektierten Strahlenbündels 36 die Empfängeroptik 22 nicht über ihre gesamte Fläche ausgeleuchtet wird, werden die reflektierten Strahlen nur von einem einzelnen Subpixel des Makropixels 32b empfangen. Die sich in der Summe ergebende, dementsprechend asymmetrische Signalverteilung ist wiederum mittels Schraffur in den Subpixeln 30 des Empfängers 28 dargestellt.

An dieser Stelle soll angemerkt werden, dass die reflektierten Strahlen abhängig von den konkreten Oberflächeneigenschaften des Gegenstandes 18c in der Regel eine höhere Strahldichte als die rückgestreuten Strahlen aufweisen, da sie üblicherweise in einen viel kleineren Raumwinkel angelenkt werden, so dass sich unerkannte Störungen durch solche reflektierten Strahlen besonders nachteilig auswirken würden.

In einer mit dem Empfänger 28 verbundenen Auswerteeinheit 34 werden nun bei einem erfindungsgemäßen Triangulationslichttaster 10 die Signale sämtlicher Subpixel 30 ausgewertet. Die Detektion einer asymmetrischen Signalverteilung innerhalb des Makropixels 32b (Fig. 2) kann durch einen Auswertealgorithmus auf verschiedene Weise berücksichtigt werden:
a) Die gesamte Signalverteilung über die Makropixel wird als ungültig bewertet. Ein von der Auswerteeinheit 34 vor Erkennung der asymmetrischen Signalverteilung bereits ausgegebenes Gegenstandserfassungssignal wird in diesem Fall nicht aktualisiert. Erst wenn keine Asymmetrie innerhalb der einzelnen Makropixel 32 mehr festgestellt wird, wird ein aktualisiertes Gegenstandserfassungssignal ausgegeben.
b) Es wird ein aktualisiertes Gegenstandserfassungssignal ausgegeben, jedoch werden die Makropixel, bei denen eine Asymmetrie über die von den jeweiligen Subpixeln 30 gelieferten Signale erkannt wird, bei der Berechnung der Position des Lichtfleckschwerpunktes auf dem Empfänger 28 nicht berücksichtigt.
c) Bei Anwendung entsprechender Algorithmen können die Signale derjenigen Makropixel, bei denen eine Asymmetrie erkannt wurde, durch einen der Asymmetrie proportionalen Korrekturfaktor korrigiert werden.

In der Auswerteeinheit 34 wird nun bei den Gegebenheiten gemäß Fig. 1 ein Summensignal für jedes der Makropixel 32 gebildet, wobei alle Makropixel 32 zur Auswertung herangezogen werden, da ihre Subpixel 30 jeweils eine symmetrische Signalverteilung innerhalb der Makropixel 32 repräsentieren. Die daraus resultierende Signalverteilung über die Makropixel 32 entspricht einem verkleinerten Abbild des durch das Strahlenbündel 16 auf dem Gegenstand 18a, 18b erzeugten Leuchtflecks. Die laterale Position des Schwerpunkts der Signalverteilung innerhalb des Empfängers 28 ist ein Maß für den Abstand zwischen dem Gegenstand 18a bzw. 18b und dem Triangulationslichttaster 10.

Anschließend wird von der Auswerteeinheit ein entsprechendes Gegenstandserfassungssignal ausgegeben. Bei einem Triangulationslichttaster mit Schaltausgang kann dies ein binäres Signal sein, wenn ein Gegenstand innerhalb einer vorgegebenen Tastweite ist. Bei einem messenden Triangulationslichttaster wird ein dem gemessenen Abstand entsprechendes digitales oder analoges Signal ausgegeben.

Bei den Gegebenheiten gemäß Fig. 2 wird bezüglich des Makropixels 32b eine asymmetrische Signalverteilung festgestellt, so keine Aktualisierung des Gegenstandserfassungssignals erfolgt und mit der nächsten Aktualisierung gewartet wird, bis alle Makropixel 32 des Empfängers 28 wieder eine symmetrische Signalverteilung liefern.

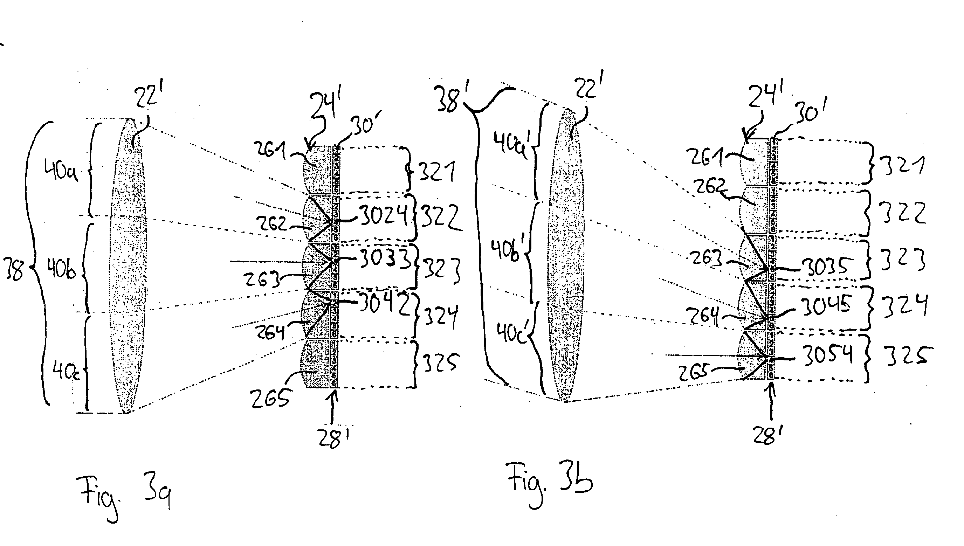

Die Figuren 3a und 3b zeigen zur Beschreibung eines Auswerteverfahrens gemäß den Ansprüchen 10 bis 18 schematisch und ausschnittsweise die Empfangskomponenten des Triangulationslichttasters, wobei sich die dargestellten Strahlengänge im Wesentlichen hinsichtlich der Position der Brennpunkte der Empfängeroptik 22' und des Mikrolinsenarrays 24' sowie der Anzahl der Subpixel pro Makropixel von den in den Figuren 1 und 2 dargestellten Strahlengängen unterscheiden, so dass mit dieser Anordnung auch mehrere Mikrolinsen bzw. Makropixel ausgeleuchtet werden können. Der übrige Aufbau entspricht den Figuren 1 und 2.

Ein von einem nicht dargestellten Gegenstand reflektiertes oder gestreutes Empfangsstrahlenbündel 38 trifft auf eine Empfängeroptik 22' und wird von dieser auf ein nur abschnittsweise dargestelltes Mikrolinsenarray 24' gebündelt, welches im Unterschied zu den Figuren 1 und 2 innerhalb der Brennweite der Empfängeroptik 22' angeordnet ist. Die Mikrolinsen 261 bis 265 lenken das Empfangsstrahlenbündel 38 auf einen unmittelbar hinter dem Mikrolinsenarray 24' angeordneten, ebenfalls nur ausschnittsweise dargestellten Empfänger 28'.

Der Empfänger 28' besteht aus einem Pixelarray, welches eine Mehrzahl von Subpixeln 30' aufweist, wobei jeweils sechs benachbarte Subpixel 30' zu einem Makropixel 321 bis 325 zusammengefasst sind. Das Makropixel 321 ist dabei der Mikrolinse 261 zugeordnet und kann die von ihr abgelenkten Strahlen empfangen. Die Makropixel 322 bis 325 sind den übrigen Mikrolinsen 262 bis 265 entsprechend zugeordnet.

Das Empfangsstrahlenbündel 38 gemäß Fig. 3a ist in drei Teilbündel 40a, 40b, 40c unterteilt, wobei nur die Strahlengänge der sie begrenzenden Strahlen dargestellt sind. Die Mittelstrahlen der Teilbündel 40a bis 40c sind jeweils durch Pfeile angedeutet. In Figur 3a trifft das Teilbündel 40a auf die Mikrolinse 262, das Teilbündel 40b auf die Mikrolinse 263 und das Teilbündel 40c auf die Mikrolinse 264.

Die Brennweiten der Empfängeroptik 22' und des Mikrolinsenarrays 24' sind dabei so gewählt, das die eine Mikrolinse erreichenden Strahlen ungefähr auf ein Subpixel des dieser Mikrolinse zugeordneten Makropixels fokussiert sind. Dabei versteht es sich, dass aufgrund eines durch die optischen Komponenten vorgegebenen Tiefenschärfebereichs nicht für alle Abstände eines rückstreuenden und/oder reflektierenden Gegenstandes eine scharfe Abbildung auf genau ein Subpixel erzielt werden kann.

In Figur 3b ist der Einfallswinkel, d.h. der Triangulationswinkel, des Empfangsstrahlenbündels 38' auf die Empfängeroptik 22' gegenüber dem Einfallswinkel des Empfangsstrahlenbündels 38 von Figur 3a aufgrund eines veränderten Abstandes des nicht dargestellten Gegenstandes verändert. Daher treffen die Teilbündel 40a' bis 40c' nun auf andere Mikrolinsen. Das Teilbündel 40a' trifft auf die Mikrolinse 263, das Teilbündel 40b' auf die Mikrolinse 264 und das Teilbündel 40c' auf die Mikrolinse 265.

Aufgrund der Zuordnung der Makropixel 321 bis 325 zu den Mikrolinsen 261 bis 265 bewirkt also die in der Abstandsänderung des Gegenstands begründete Änderung des Einfallswinkels des Empfangsstrahlenbündels 38, 38' eine Verschiebung der auf die Makropixel bezogenen Empfangssignalverteilung auf dem Empfänger 28', so dass eine Triangulation durch die Bestimmung der Position eines Maximums und/oder Schwerpunkts der Empfangssignalverteilung bezüglich der Makropixel 321 bis 325 möglich ist.

Wie ein Vergleich der Figuren 3a und 3b zeigt, bedingt die Änderung des Einfallswinkels aber auch eine Änderung bzw. Verschiebung der Empfangssignalverteilung innerhalb eines einem bestimmten Teilbündel zugeordneten Makropixels.

Betrachtet man beispielsweise das Makropixel 324, wird dieses in Figur 3a von dem Teilbündel 40c beaufschlagt, wobei die Mikrolinse 264 das Teilbündel 40c im Wesentlichen auf das zweite Subpixel 3042 fokussiert.

Aufgrund des veränderten Einfallswinkels wird in Figur 3b nun das Teilbündel 40b' auf das Makropixel 324 gelenkt, wobei die zugeordnete Mikrolinse 264 in diesem Fall das Teilbündel 40b' auf das fünfte Mikropixel 3045 des Makropixels 324 fokussiert.

Die Veränderung des Einfallswinkels der Empfangsstrahlenbündel 38, 38' bewirkt also im Makropixel 324 eine Verschiebung des Maximums der Empfangssignalverteilung um drei Subpixeleinheiten.

Eine Verschiebung lässt sich z.B. auch für das Makropixel 323 feststellen. Anstelle des Subpixels 3033 gemäß Fig. 3a ist in Fig. 3b das zwei Subpixeleinheiten entfernte Subpixel 3035 beaufschlagt.

Daraus ist ersichtlich, dass ein Abstand zwischen dem Gegenstand und dem Triangulationslichttaster nicht nur aus der lateralen Position des Schwerpunkts der Empfangssignalverteilung über die Makropixel bestimmt werden kann, sondern dass auch innerhalb eines einzelnen Makropixels eine Abstandsbestimmung aus der Empfangssignalverteilung über dessen Subpixel nach dem Triangulationsprinzip möglich ist.

Somit kann jedem Subpixel ein entsprechender Abstand zugeordnet werden und in der Auswerteeinheit abgelegt werden. Die Zuordnung kann dabei sowohl mittels entsprechender Referenzmessungen als auch mittels trigonometrischer Berechnungen erfolgen.

Es wird nun nachfolgend erläutert, auf welche Weise mit einer Anordnung gemäß Fig. 3a und 3b eine Fehldetektion vermieden werden kann. Ein ideal rückstreuender Gegenstand 18a, 18b wird, wie in Fig. 1 gezeigt, immer die Empfängeroptik 22' vollständig ausleuchten, so dass alle drei Teilbündel 40a bis c erfasst werden. Gemäß Fig. 3a wird der Schwerpunkt der Empfangssignalverteilung auf dem Makropixel 323 liegen.

Ein hingegen ausschließlich reflektierender Gegenstand 18c wird den nur kleinen, vom Strahlenbündel 16 erzeugten Lichtfleck nur auf einen Teilbereich der Empfängeroptik 22' lenken, wie in Fig. 2 gezeigt. Somit trifft beispielsweise nur das Strahlenbündel 40c (Fig. 3a) auf das Mikrolinsenarray 24' und beaufschlagt daher lediglich das Makropixel 324, die übrigen Makropixel bleiben dunkel oder zumindest deutlich dunkler als das Makropixel 324.

Eine Schwerpunktbestimmung wird also nun das Makropixel 324 als Schwerpunkt der Empfangssignalverteilung bestimmen. Das Makropixel 324 entspricht aber dem Schwerpunkt der Empfangssignalverteilung, die unter einem Einfallswinkel gemäß Fig. 3b von einem sich in einem anderen Abstand befindenden, rückstreuenden Gegenstand erzeugt wird.

Eine ausschließlich auf die Schwerpunkte der Empfangssignalverteilung über die Makropixel abstellende Triangulation würde somit fälschlicherweise dem Teilbündel 40c gemäß Fig. 3a einen Einfallswinkel gemäß Fig. 3b zuordnen und daher zu einer Fehlbestimmung des Abstandes führen.

Wird nun zusätzlich die Empfangssignalverteilung über die Subpixel innerhalb der Makropixel berücksichtigt, kann die Auswerteeinheit erkennen, dass aufgrund der Beaufschlagung des Subpixels 3042 in Fig. 3a der reflektierende Gegenstand 18c sich in einem diesem Subpixel 3042 zugeordneten Abstand befinden muss. Ein einer Position gemäß Fig. 3b zuzuordnender Gegenstand hätte nämlich statt des Subpixels 3042 das Subpixel 3045 beaufschlagen müssen. Gemäß der beschriebenen Verfahrensvariante erfolgt die Abstandsbestimmung also dadurch, dass zuerst der Schwerpunkt der Empfangssignalverteilung über die Makropixel bestimmt wird und der Abstand dann in Abhängigkeit von der Empfangssignalverteilung über die Subpixel desjenigen Makropixels bestimmt wird, welchem zuvor der Schwerpunkt zugeordnet wurde.

Das vorstehend beschriebene Verfahren lässt sich dahingehend abwandeln, dass zur Bestimmung des Gegenstandserfassungssignals ohne Berücksichtigung der Empfangssignalverteilung über die Makropixel direkt auf die einzelnen Subpixel zugegriffen wird. Da jedem Subpixel, das mit Lichtstrahlen beaufschlagt wird, ein bestimmter Abstandswert zugeordnet werden kann, und üblicherweise mehrere Subpixel zugleich von einem in einem bestimmten Abstand rückstreuenden Gegenstand beaufschlagt werden, lassen sich diese Subpixel zu einem Metapixel zusammenfassen.

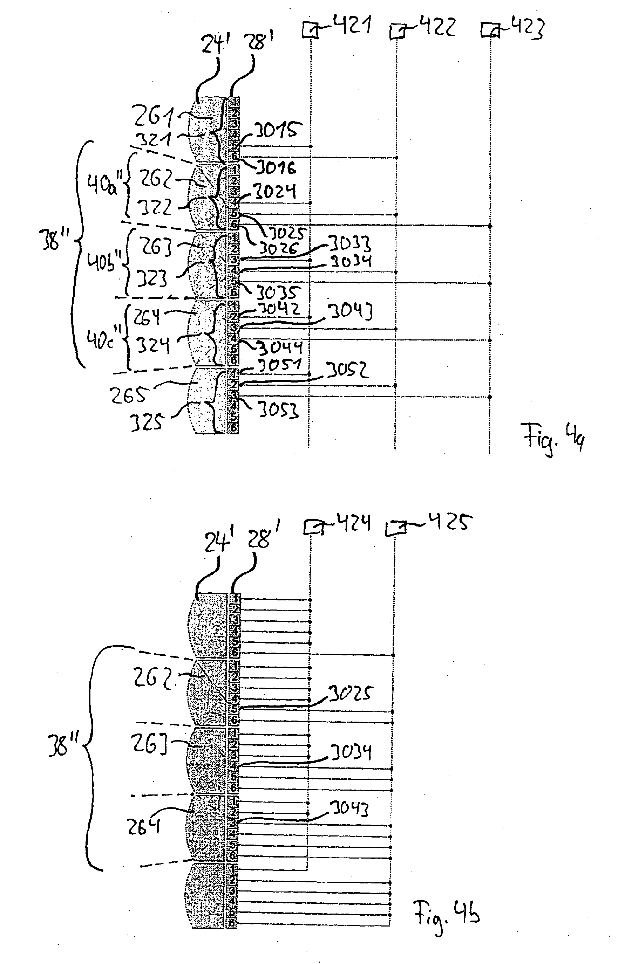

Eine derartige Zusammenschaltung für einen messenden Triangulationslichttaster ist in Fig. 4a schematisch dargestellt. Sie kann sowohl in Form einer festen Verdrahtung als auch durch eine variable Zuordnung erfolgen, die beispielsweise mittels einer Schalteranordnung, aber auch durch eine entsprechende Softwarecodierung realisiert werden kann.

Ein von einer nicht dargestellten Empfängeroptik abgelenktes Strahlenbündel 38", das von einem in einem bestimmten Abstand angeordneten, hier ebenfalls nicht dargestellten Gegenstand rückgestreut wird und die Teilbündel 40a" bis 40c" umfasst, wird durch das Mikrolinsenarray 24' auf den Empfänger 28' abgelenkt.

Die Zuordnung der Bezugszeichen zu den Mikrolinsen 261 bis 265, den Makropixeln 321 bis 325 und den Subpixeln entspricht den Fig. 3a und b. Die Subpixel 3015, 3024, 3033, 3042 und 3051 sind zu dem Metapixel 421, die Subpixel 3016, 3025, 3034, 3043 und 3052 zu dem Metapixel 422 und die Subpixel 3026, 3035, 3044 und 3053 zu dem Metapixel 423 zusammengeschaltet, wobei den jeweils zu einem gemeinsamen Metapixel zusammengeschalteten Subpixeln der gleiche Abstandswert zugeordnet ist. Auf die Darstellung weiterer Metapixel und der zugehörigen Zusammenschaltungen wurde zur Wahrung der Übersichtlichkeit verzichtet.

Das Strahlenbündel 38" beaufschlagt hier die Subpixel 3025, 3034 und 3043, die dem Metapixel 422 zugeordnet sind. Folglich würde bei Bestimmung der Empfangssignalverteilung über die Metapixel festgestellt, dass der Metapixel-Schwerpunkt beim Metapixel 422 liegt, so dass letztlich der diesem Metapixel zugeordnete Abstand ermittelt wird.

Falls von dem Gegenstand nun anstelle der rückgestreuten Lichtstrahlen lediglich reflektierte Lichtstrahlen ausgesandt werden, wird nur noch ein kleiner Bereich der Empfängeroptik beleuchtet, so dass beispielsweise nur noch eines der Teilbündel 40a" bis 40c" auf den Empfänger 28' trifft. Da jedoch die Subpixel 3025, 3034 und 3043 alle zu dem Metapixel 422 zusammengeschaltet sind, wird auch jedes dieser Teilbündel 40a" bis 40c" einen Schwerpunkt der Empfangssignalverteilung über die Metapixel beim Metapixel 422 erzeugen.

Weiterhin ist es möglich, nicht nur Subpixel zusammenzuschalten, denen der gleiche Abstand zugeordnet ist, sondern auch Subpixel, denen innerhalb eines Abstandsbereiches liegende Abstände zugeordnet sind. Eine derartige Abwandlung der Schaltung von Fig. 4a ist beispielhaft in Fig. 4b dargestellt.

Die gemäß Fig. 4a den Metapixeln 421 und 422 zugeordneten Subpixel sowie weitere Subpixel, die durch von weiter schräg unten auftreffende Lichtstrahlen beaufschlagt werden, sind in Fig. 4b dem Metapixel 424 zugeordnet, während dem Metapixel 425 die ursprünglich dem Metapixel 423 zugeordneten Subpixel sowie weitere Subpixel, die durch von weiter schräg oben auftreffende Lichtstrahlen beaufschlagt werden, zugeordnet sind. Damit kann von einem sich in dem einem Metapixel zugeordneten Abstandsbereich befindenden Gegenstand unabhängig von dessen Oberflächeneigenschaften ein zuverlässiges Gegenstandserfassungssignal erzeugt werden.

Bei dem in Fig. 4b dargestellten Ausführungsbeispiel sind darüber hinaus nur zwei Metapixel vorgesehen, so dass eine derartige Anordnung zur Realisierung eines schaltenden Triangulationslichttasters verwendet werden kann, bei dem Gegenstände, die sich innerhalb des dem Metapixel 425 zugeordneten Abstandsbereichs befinden, ein Signal "EIN" erzeugen, während Gegenstände, die sich innerhalb des dem Metapixel 424 zugeordneten Abstandsbereichs befinden, ein Signal "AUS" erzeugen, dass zum Beispiel zum Abschalten einer Maschine führt.

In Fig. 4b wird also das Strahlenbündel 38", das im übrigen dieselben Mikrolinsen 261 bis 263 und Subpixel 3025, 3034 und 3043 beaufschlagt wie in Fig. 4a, ein Signal in dem Metapixel 425 erzeugen und somit zu einem Gegenstandserfassungssignal "EIN" führen.

Durch die vorstehend beschriebene Anordnung wird eine sichere und zuverlässige Gegenstandserfassung sowohl bei einem messenden als auch bei einem schaltenden Triangulationslichttaster gewährleistet, auch wenn nur ein Teil der Empfängeroptik beleuchtet wird.

### Bezugszeichenliste

- 10: Triangulationslichttaster
- 12: Lichtquelle
- 14: Sendeoptik
- 16: Strahlenbündel
- 18a, b, c: Gegenstand
- 20a, b: rückgestreute Strahlen
- 22, 22': Empfängeroptik
- 24, 24': Mikrolinsenarray
- 26a, b, 261-265: Mikrolinse
- 28, 28': Empfänger
- 30, 30',:
- 3015-3054: Subpixel
- 32a, b, 321-325: Makropixel
- 34: Auswerteeinheit
- 36: reflektierte Strahlen
- 38, 38', 38": Empfangsstrahlenbündel
- 40a, b, c;:
- 40a', b', c';:
- 40a", b", c": Teilbündel
- 421-425: Metapixel

## Patentansprüche

1. Optoelektronische Vorrichtung zur Erfassung eines Gegenstands nach dem Triangulationsprinzip mit einer Lichtquelle (12), einer Empfangsanordnung zur Detektion von von einem Gegenstand (18a, 18b, 18c) rückgestreuten und/oder reflektierten Lichtstrahlen (20a, 20b, 36, 38, 38') und einer Auswerteeinheit (34) zur Ausgabe eines Gegenstandserfassungssignals, wobei die Empfangsanordnung eine Empfängeroptik (22) zur Ablenkung der von dem Gegenstand (18a, 18b, 18c) rückgestreuten und/oder reflektierten Lichtstrahlen (20a, 20b, 36, 38, 38') aufweist,
**dadurch gekennzeichnet,**
**dass** die Empfangsanordnung ein der Empfängeroptik (22) nachgeordnetes Mikrolinsenarray (24', 24) sowie ein aus Fotodetektoren bestehendes Pixelarray (28) aufweist, wobei jeder Mikrolinse (26a, 26b, 261-265) ein mehrere Subpixel (30, 30') aufweisendes Makropixel (32a, 32b, 321-325) zugeordnet ist, und
**dass** die Auswerteeinheit (34) eine Einheit zur Ermittlung der Empfangssignalverteilung über die Subpixel (30, 30') innerhalb eines Makropixels (32a, 32b, 321-325) umfasst.

2. Optoelektronische Vorrichtung nach Anspruch 1,
**dadurch gekennzeichnet,**
**dass** das Pixelarray (28, 28') zeilenförmig ist.

3. Optoelektronische Vorrichtung nach Anspruch 1,
**dadurch gekennzeichnet,**
**dass** das Pixelarray (28, 28') die Form eines zweidimensionalen Arrays aufweist.

4. Optoelektronische Vorrichtung nach einem der vorhergehenden Ansprüche,
**dadurch gekennzeichnet,**
**dass** die Brennweiten und/oder die Aperturen der Empfängeroptik (22, 22') und der Mikrolinsen (26a, 26b, 261-265) derart gewählt sind, dass zumindest die von einem innerhalb eines Erfassungsbereichs angeordneten Gegenstand (18a, 18b, 18c) rückgestreuten Lichtstrahlen (20a, 20b, 38, 38'), welche die Empfängeroptik (22, 22') vollständig ausleuchten, von mehreren benachbarten Mikrolinsen (26a, 26b, 261-265) ablenkbar sind und jeweils innerhalb der diesen Mikrolinsen (26a, 26b, 261-265) zugeordneten Makropixel (32a, 32b, 321-325) auf einen insbesondere mehrere einzelne Subpixel (30, 30') umfassenden Teilbereich des Makropixels (32a, 32b, 321-325) fokussierbar oder ablenkbar sind.

5. Optoelektronische Vorrichtung nach einem der vorhergehenden Ansprüche,
**dadurch gekennzeichnet ,**
**dass** jeweils einem Subpixel (30, 30') oder der Position eines Charakteristikums der Empfangssignalverteilung über die Subpixel eines Makropixels, welches oder welche durch von einem in einem vorgegebenen Abstand angeordneten Gegenstand (18a, 18b, 18c) rückgestreute und/oder reflektierte Lichtstrahlen (20a, 20b, 36, 38') beaufschlagbar ist, ein entsprechender Abstandswert zugeordnet ist.

6. Optoelektronische Vorrichtung nach Anspruch 5,
**dadurch gekennzeichnet,**
**dass** jeweils mehrere Subpixel (30, 30') des Pixelarrays (28, 28'), denen ein gleicher Abstandswert zugeordnet ist, zu einem Metapixel (421-425) zusammengefasst sind, und/oder dass jeweils mehrere Subpixel (30, 30') des Pixelarrays (28, 28'), denen ein Abstandsbereich zugeordnet ist, zu einem Metapixel (421-425) zusammengefasst sind.

7. Optoelektronische Vorrichtung nach Anspruch 6,
**dadurch gekennzeichnet,**
**dass** mehrere Metapixel (421-425) vorgesehen sind, denen jeweils unterschiedliche Abstandswerte und/oder Abstandsbereiche zugeordnet sind.

8. Optoelektronische Vorrichtung nach Anspruch 6 oder 7,
**dadurch gekennzeichnet,**
**dass** die Subpixel (30, 30') fest verschaltet sind.

9. Optoelektronische Vorrichtung nach Anspruch 6 oder 7,
**dadurch gekennzeichnet,**
**dass** die Subpixel (30, 30') veränderbar verschaltet sind.

10. Verfahren zum Betrieb einer Vorrichtung gemäß einem der Ansprüche 1 bis 9,
**dadurch gekennzeichnet ,**
**dass** jeder Mikrolinse (26a, 26b, 261-265) ein mehrere Subpixel (30, 30') aufweisendes Makropixel (32a, 32b, 321-325) zugeordnet wird, dass eine Empfangssignalverteilung über die Subpixel (30, 30') innerhalb eines Makropixels (32a, 32b, 321-325) ermittelt wird, und dass das Gegenstandserfassungssignal in Abhängigkeit von der Empfangssignalverteilung über die Makropixel (32a, 32b, 321-325), und/oder in Abhängigkeit von der Empfangssignalverteilung über die Subpixel (30, 30') wenigstens eines Makropixels (32a, 32b, 321-325) und/oder in Abhängigkeit von der Empfangssignalverteilung über Metapixel (421-425) erzeugt wird,
wobei im letzteren Fall jeweils einem Subpixel (30, 30') oder der Position eines Charakteristikums der Empfangssignalverteilung über die Subpixel eines Makropixels, welches oder welche durch von einem in einem vorgegebenen Abstand angeordneten Gegenstand (18a, 18b, 18c) rückgestreute und/oder reflektierte Lichtstrahlen (20a, 20b, 36, 38') beaufschlagbar ist, ein entsprechender Abstandswert zugeordnet wird, und wobei im letzteren Fall jeweils mehrere Subpixel (30, 30') des Pixelarrays (28, 28'), denen ein gleicher Abstandswert zugeordnet ist, zu dem Metapixel (421-425) zusammengefasst werden und/oder jeweils mehrere Subpixel (30, 30') des Pixelarrays (28, 28'), denen ein Abstandsbereich zugeordnet wird, zu dem Metapixel (421-425) zusammengefasst werden.

11. Verfahren nach Anspruch 10,
**dadurch gekennzeichnet,**
**dass** ein in Abhängigkeit von der Empfangssignalverteilung über die Makropixel (32a, 32b, 321-325) bestimmtes Gegenstandserfassungssignal aufgrund der Empfangssignalverteilung über die Subpixel (30, 30') wenigstens eines Makropixels (32a, 32b, 321-325) korrigiert wird.

12. Verfahren nach Anspruch 10 oder 11,
**dadurch gekennzeichnet,**
**dass** ein in Abhängigkeit von der Empfangssignalverteilung über die Makropixel (32a, 32b, 321-325) bestimmtes Gegenstandserfassungssignal aufgrund der Empfangssignalverteilung über die Meta-pixel (421-425) korrigiert wird.

13. Verfahren nach Anspruch 12,
**dadurch gekennzeichnet,**
**dass** das Gegenstandserfassungssignal nur in Abhängigkeit von der Einpfangssignalverteilung über eine Mehrzahl von zur Gegenstandserfassung herangezogenen Metapixel (421-425) erzeugt wird.

14. Verfahren nach einem der Ansprüche 10 bis 13,
**dadurch gekennzeichnet,**
**dass** das Gegenstandserfassungssignal in Abhängigkeit von der Position eines Charakteristikums der Empfangssignalverteilung erzeugt und/oder korrigiert wird.

15. Verfahren nach einem der Ansprüche 10 bis 14,
**dadurch gekennzeichnet,**
**dass** das Gegenstandserfassungssignal als binäres Ausgangssignal aufgrund eines sich innerhalb einer vorgegebenen Tastweite befindenden Gegenstands (18a, 18b, 18c) erzeugt wird.

16. Verfahren nach Anspruch 15,
**dadurch gekennzeichnet,**
**dass** das binäre Ausgangssignal eine Funktion der Position eines Charakteristikums der Empfangssignalverteilung über die Metapixel (421-425) ist.

17. Verfahren nach Anspruch 15,
**dadurch gekennzeichnet,**
**dass** zwei zueinander komplementäre Abstände und/oder Abstandsbereiche jeweils einem von zwei Metapixeln (421-425) zugeordnet sind, und
**dass** das binäre Ausgangssignal einen Zustand in Abhängigkeit von dem jeweils beaufschlagten Metapixel (421-425) annimmt.

18. Verfahren nach einem der Ansprüche 10 bis 14,
**dadurch gekennzeichnet,**
**dass** das Gegenstandserfassungssignal als analoges und/oder digitales Abstandssignal erzeugt wird, welches ein Maß für den Abstand des Gegenstandes (18a, 18b, 18c) von der Empfangsanordnung und/oder der Lichtquelle (12) ist und eine Funktion der Position eines Charakteristikums der Empfangssignalverteilung ist.

19. Verfahren zum Betrieb einer Vorrichtung gemäß Anspruch 10,
**dadurch gekennzeichnet,**
**dass** die von einem Makropixel (32a, 32b, 321-325) gelieferten Empfangssignale zur Gegenstandserfassung herangezogen werden, wenn die Subpixel (30, 30') des jeweiligen Makropixels (32a, 32b, 321-325) eine im Wesentlichen symmetrische Signalverteilung aufweisen, und dass die von einem Makropixel (32a, 32b, 321-325) gelieferten Empfangssignale nicht oder nur nach Durchführung eines Korrekturschritts zur Gegenstandserfassung herangezogen werden, wenn die Subpixel (30, 30') des jeweiligen Makropixels (32a, 32b, 321-325) eine im Wesentlichen asymmetrische Signalverteilung aufweisen.

20. Verfahren nach Anspruch 19,
**dadurch gekennzeichnet,**
**dass** das Gegenstandserfassungssignal aufgrund einer Empfangssignalverteilung über eine Mehrzahl von zur Gegenstandserfassung herangezogenen Makropixel (32a, 32b, 321-325) bestimmt wird, wobei ein Signal jeweils eines Makropixels (32a, 32b, 321-325) durch Summenbildung über dessen Subpixel (30, 30') ermittelt wird.

21. Verfahren nach Anspruch 19 oder 20,
**dadurch gekennzeichnet,**
**dass** das Gegenstandserfassungssignal in Abhängigkeit von der Position eines Charakteristikums der über eine Mehrzahl von zur Gegenstandserfassung herangezogenen Makropixel (32a, 32b, 321-325) ermittelten Empfangssignalverteilung innerhalb des Pixelarrays (28, 28') erzeugt wird.

22. Verfahren nach Anspruch 20 oder 21,
**dadurch gekennzeichnet,**
**dass** das Gegenstandserfassungssignal als binäres Ausgangssignal aufgrund eines sich innerhalb einer vorgegebenen Tastweite befindenden Gegenstands (18a, 18b, 18c) erzeugt wird, wobei das Ausgangssignal eine Funktion der Position eines Charakteristikums der Empfangssignalverteilung innerhalb des Pixelarrays (28, 28') ist.

23. Verfahren nach Anspruch 20 oder 21,
**dadurch gekennzeichnet,**
**dass** das Gegenstandserfassungssignal als analoges und/oder digitales Abstandssignal aufgrund eines erfassten Gegenstands erzeugt wird, wobei die Größe des Abstandssignals ein Maß für den Abstand des Gegenstandes (18a, 18b, 18c) von der Empfangsanordnung und/oder der Lichtquelle (12) ist und eine Funktion der Position eines Charakteristikums der Empfangssignalverteilung innerhalb des Pixelarrays (28, 28') ist.

24. Verfahren nach einem der Ansprüche 19 bis 23,
**dadurch gekennzeichnet,**
**dass** das Gegenstandserfassungssignal während des Erkennens zumindest eines Makropixels (32a, 32b, 321-325) mit einer im Wesentlichen asymmetrischen Empfangssignalverteilung über die Subpixel (30, 30') seinen letzen Wert unmittelbar vor dem Erkennen behält.

25. Verfahren nach einem der Ansprüche 10 bis 24,
**dadurch gekennzeichnet,**
**dass** als Position des Charakteristikums der Empfangssignalverteilung die Position des geometrischen Schwerpunkts oder des Maximums der Empfangssignalverteilung bestimmt wird.

## Claims

1. An optoelectronic apparatus for the detection of an object in accordance with the triangulation principle comprising a light source (12), a receiver arrangement for the detection of light beams (20a, 20b, 36, 38, 38') scattered back and/or reflected by an object (18a, 18b, 18c) and an evaluation unit (34) for outputting an object detection signal, wherein the receiver arrangement has a receiving optics (22) for the deflection of the light beams (20a, 20b, 36, 38, 38') scattered back and/or reflected by the object (18a, 18b, 18c),
**characterized in that**
the receiver arrangement has a microlens array (24', 24) disposed downstream of the receiving optics (22) as well as a pixel array (28) comprising photodetectors, with a macropixel (32a, 32b, 321-325) having a plurality of subpixels (30, 30') being associated with each microlens (26a, 26b, 261-265); and
**in that** the evaluation unit (34) comprises a unit for the determination of the received signal distribution over the subpixels (30, 30') within a macropixel (32a, 32b, 321-325).

2. An optoelectronic apparatus in accordance with claim 1
**characterized in that**
the pixel array (28, 28') is linear.

3. An optoelectronic apparatus in accordance with claim 1
**characterized in that**
the pixel array (28, 28') has the form of a two-dimensional array.

4. An optoelectronic apparatus in accordance with any one of the preceding claims,
**characterized in that**
the focal lengths and/or the apertures of the receiving optics (22, 22') and of the microlenses (26a, 26b, 261, 265) are selected such that at least the light beams (20a, 20b, 38, 38') which are scatted back by an object (18a, 18b, 18c) arranged within a detection region and which fully illuminate the receiving optics (22, 22') can be deflected by a plurality of adjacent microlenses (26a, 26b, 261-265) and can each be focused or deflected within the macropixel (32a, 32b, 321-325) associated with these microlenses (26a, 26b, 261-265) onto a part region of the macropixel (32a, 32b, 321-325) in particular comprising a plurality of individual subpixels (30, 30').

5. An optoelectronic apparatus in accordance with any one of the preceding claims,
**characterized in that**
a corresponding spacing value is associated with a respective subpixel (30, 30') or with the position of a characteristic of the received signal distribution over the subpixels of a macropixel which can be acted on by light rays (20a, 20b, 36, 38') scattered back and/or reflected by an object (18a, 18b, 18c) arranged at a predefined spacing.

6. An optoelectronic apparatus in accordance with claim 5,
**characterized in that**
a respective plurality of subpixels (30, 30') of the pixel array (28, 28'), with which a like spacing value is associated, are combined to form a metapixel (421-425); and/or
**in that** a respective plurality of subpixels (30, 30') of the pixel array (28, 28') with which a spacing range is associated, are combined to form a metapixel (421-425).

7. An optoelectronic apparatus in accordance with claim 6,
**characterized in that**
a plurality of metapixels (421-425) are provided with which respective different spacing values and/or spacing ranges are associated.

8. An optoelectronic apparatus in accordance with claim 6 or claim 7,
**characterized in that**
the subpixels (30, 30') are fixedly connected.

9. An optoelectronic apparatus in accordance with claim 6 or claim 7,
**characterized in that**
the subpixels (30, 30') are variably connected.

10. A method of operating an apparatus in accordance with any one of the claims 1 to 9,
**characterized in that**
a macropixel (32a, 32b, 321-325) having a plurality of subpixels (30, 30') is associated with each microlens (26a, 26b, 261-265);
**in that** a received signal distribution is determined over the subpixels (30, 30') within a macropixel (32a, 32b, 321-325); and **in that** the object detection signal is generated in dependence on the received signal distribution over the macropixels (32a, 32b, 321-325) and/or in dependence on the received signal distribution over the subpixels (30, 30') of at least one macropixel (32a, 32b, 321-325) and/or in dependence on the received signal distribution over metapixels (421-425),
wherein in the latter case a corresponding spacing value is associated with a respective subpixel (30, 30') or with the position of a characteristic of the received signal distribution over the subpixels of a macropixel which can be acted on by light rays (20a, 20b, 36, 38') scattered back and/or reflected by an object (18a, 18b, 18c) arranged at a predefined spacing, and wherein in the latter case a respective plurality of subpixels (30, 30') of the pixel array (28, 28'), with which a like spacing value is associated, are combined to form the metapixel (421-425) and/or a respective plurality of subpixels (30, 30') of the pixel array (28, 28') with which a spacing range is associated, are combined to form the metapixel (421-425).

11. A method in accordance with claim 10,
**characterized in that** an object detection signal determined in dependence on the received signal distribution over the macropixels (32a, 32b, 321-325) is corrected on the basis of the received signal distribution over the subpixels (30, 30') of at least one macropixel (32a, 32b, 321-325).

12. A method in accordance with claim 10 or claim 11,
**characterized in that**
an object detection signal determined in dependence on the received signal distribution over the macropixels (32a, 32b, 321-325) is corrected on the basis of the received signal distribution over the metapixels (421-425).

13. A method in accordance with claim 12,
**characterized in that**
the object detection signal is only generated in dependence on the received signal distribution over a plurality of metapixels (421-425) used for the object detection.

14. A method in accordance with any one of the claims 10 to 13,
**characterized in that**
the object detection signal is generated and/or corrected in dependence on the position of a characteristic of the received signal distribution.

15. A method in accordance with any one of the claims 10 to 14,
**characterized in that**
the object detection signal is generated as a binary output signal on the basis of an object (18a, 18b, 18c) located within a predefined scanning range.

16. A method in accordance with claim 15,
**characterized in that**
the binary output signal is a function of the position of a characteristic of the received signal distribution over the metapixels (421-425).

17. A method on accordance with claim 15,
**characterized in that**
two mutually complementary spacings and/or spacing ranges are each associated with one of two metapixels (421-425); and
**in that** the binary output signal adopts a state in dependence on the respective metapixel (421-425) which has been acted on.

18. A method in accordance with any one of the claims 10 to 14,
**characterized in that**
the object detection signal is generated as an analog and/or digital spacing signal which is a measure for the spacing of the object (18a, 18b, 18c) from the receiver arrangement and/or from the light source (12) and is a function of the position of a characteristic of the received signal distribution.

19. A method of operating an apparatus in accordance with claim 10,
**characterized in that**
the received signals delivered from a macropixel (32a, 32b, 321-325) are used for the object detection when the subpixels (30, 30') of the respective macropixel (32a, 32b, 321-325) have a substantially symmetrical signal distribution; and
**in that** the received signals delivered from a macropixel (32a, 32b, 321-325) are not used for the object detection or are only used for the object detection after carrying out a correction step when the subpixels (30, 30') of the respective macropixel (32a, 32b, 321-325) have a substantially asymmetric signal distribution.

20. A method in accordance with claim 19,
**characterized in that**
the object detection signal is determined on the basis of a received signal distribution over a plurality of macropixels (32a, 32b, 321-325) used for the object detection, with a signal of a respective macropixel (32a, 32b, 321-325) being determined by sum formation over its subpixels (30, 30').

21. A method in accordance with claim 19 or claim 20,
**characterized in that**
the object detection signal is generated in dependence on the position of a characteristic of the received signal distribution within the pixel array (28, 28') determined over a plurality of macropixels (32a, 32b, 321-325) used for the object detection.

22. A method in accordance with claim 20 or claim 21,
**characterized in that**
the object detection signal is generated as a binary output signal on the basis of an object (18a, 18b, 18c) located within a predefined scanning range, with the output signal being a function of the position of a characteristic of the received signal distribution within the pixel array (28, 28').

23. A method in accordance with claim 20 or claim 21,
**characterized in that**
the object detection signal is generated as an analog and/or digital spacing signal on the basis of a detected object, with the size of the spacing signal being a measure for the spacing of the object (18a, 18b, 18c) from the receiver arrangement and/or from the light source (12) and being a function of the position of a characteristic of the received signal distribution within the pixel array (28, 28').

24. A method in accordance with any one of the claims 19 to 23,
**characterized in that**
during the recognition of at least one macropixel (32a, 32b, 321-325) with a substantially asymmetric signal distribution over the subpixels (30, 30'), the object detection signal maintains its last value directly prior to the recognition.

25. A method in accordance with any one of the claims 10 to 24,
**characterized in that**
the position of the geometric center of gravity or of the maximum of the received signal distribution is determined as the position of the characteristic of the received signal distribution.

## Revendications

1. Dispositif optoélectronique pour détecter un objet d'après le principe de triangulation, comprenant une source de lumière (12), un agencement de réception pour la détection de rayons lumineux (20a, 20b, 36, 38, 38') diffusés et/ou réfléchis en retour depuis un objet (18a, 18b, 18c), et une unité d'évaluation (34) pour délivrer un signal de détection d'objet, dans lequel l'agencement de réception comprend une optique de réception (22) pour défléchir les rayons lumineux (20a, 20b, 36, 38, 38') diffusés et/ou réfléchis en retour depuis l'objet (18a, 18b, 18c),
**caractérisé en ce que**
l'agencement de réception comprend un réseau de microlentilles (24', 24) agencé après l'optique de réception (22), ainsi qu'un réseau de pixels constitué de photodétecteurs (28), de sorte qu'un macro-pixel (32a, 32b, 321-325) comprenant plusieurs sous-pixels (30, 30') est associé à chaque microlentille (26a, 26b, 261-265), et
**en ce que** l'unité d'évaluation (34) comprend une unité pour déterminer la répartition du signal de réception sur les sous-pixels (30, 30') à l'intérieur d'un macro-pixel (32a, 32b, 321-325).

2. Dispositif optoélectronique selon la revendication 1,
**caractérisé en ce que** le réseau de pixels (28, 28') est en forme de ligne.

3. Dispositif optoélectronique selon la revendication 1,
**caractérisé en ce que** le réseau de pixels (28, 28') présente la forme d'un réseau bidimensionnel.

4. Dispositif optoélectronique selon l'une des revendications précédentes,
**caractérisé en ce que** les distances focales et/ou les ouvertures de l'optique de réception (22, 22') et des microlentilles (26a, 26b, 261-265) sont choisies de telle façon qu'au moins ceux des rayons lumineux (20a, 20b, 38, 38'), diffusés en retour par un objet (18a, 18b, 18c) agencé à l'intérieur d'une zone de détection, qui illuminent entièrement l'optique de réception (22, 22'), sont susceptibles d'être défléchis par plusieurs microlentilles voisines (26a, 26b, 261-265), et sont susceptibles d'être focalisés ou défléchis, respectivement à l'intérieur des macro-pixels (32a, 32b, 321-325) associés à l'intérieur de ces microlentilles (26a, 26b, 261-265), vers une zone partielle, comprenant en particuliers plusieurs sous-pixels individuels (30, 30'), du macropixel (32a, 32b, 321-325).

5. Dispositif optoélectronique selon l'une des revendications précédentes,
**caractérisé en ce qu'**une valeur de distance correspondant est associée respectivement à un sous-pixel (30, 30') ou à la position d'une caractéristique de la répartition du signal de réception sur les sous-pixels d'un macro-pixel qui est susceptible d'être atteint par les rayons lumineux (20a, 20b, 36, 38') diffusés et/ou réfléchis en retour par un objet (18a, 18b, 18c) agencé à une distance prédéterminée.

6. Dispositif optoélectronique selon la revendication 5,
**caractérisé en ce que** respectivement plusieurs sous-pixels (30, 30') du réseau de pixels (28, 28'), auxquels est associée une même valeur de distance, sont regroupés en un méta-pixel (421-425), et/ou en ce que respectivement plusieurs sous-pixels (30, 30') du réseau de pixels (28, 28'), auxquels est associée une plage de distance, sont regroupés en un méta-pixel (421-425).

7. Dispositif optoélectronique selon la revendication 6,
**caractérisé en ce qu'**il est prévu plusieurs méta-pixels (421-425), auxquels sont respectivement associées des valeurs de distance différentes et/ou des plages de distance différentes.

8. Dispositif optoélectronique selon la revendication 6 ou 7,
**caractérisé en ce que** les sous-pixels (30, 30') sont branchés en un circuit fixe.

9. Dispositif optoélectronique selon la revendication 6 ou 7,
**caractérisé en ce que** les sous-pixels (30, 30') sont branchés en un circuit modifiable.

10. Procédé pour le fonctionnement d'un dispositif selon l'une des revendications 1 à 9,
**caractérisé en ce qu'**un macro-pixel (32a, 32b, 321-325) comprenant plusieurs sous-pixels (30, 30') est associé à chaque microlentille (26a, 26b, 261-265),
**en ce qu'**une répartition du signal de réception sur les sous-pixels (30, 30') à l'intérieur d'un macro-pixel (32a, 32b, 321-325) est déterminée, et
**en ce que** le signal de détection d'objet est engendré en fonction de la répartition du signal de réception sur les macro-pixels (32a, 32b, 321-325), et/ou en fonction de la répartition du signal de réception sur les sous-pixels (30, 30') d'au moins un macro-pixel (32a, 32b, 321-325) et/ou en fonction de la répartition du signal de réception sur les méta-pixels (421-425),
dans lequel, dans le dernier cas, une valeur de distance correspondante est associée respectivement à un sous-pixel (30, 30') ou à la position d'une caractéristique de la répartition du signal de réception sur les sous-pixels d'un macro-pixel qui est susceptible d'être illuminé par les rayons lumineux (20a, 20b, 36, 38') diffusés et/ou réfléchis en retour par un objet (18a, 18b, 18c) agencé à une distance prédéterminée, et dans lequel, dans le dernier cas, respectivement plusieurs sous-pixels (30, 30') du réseau de pixels (20, 28') auquel est associée une même valeur de distance sont regroupés dans le méta-pixel (421-425) et/ou respectivement plusieurs sous-pixels (30, 30') du réseau de pixels (28, 28') auquel est associée une plage de distance sont regroupés dans le méta-pixel (421-425).

11. Procédé selon la revendication 10,
**caractérisé en ce qu'**un signal de détection d'objet, déterminé en fonction de la répartition du signal de réception sur les macro-pixels (32a, 32b, 321-325) est corrigé en raison de la répartition du signal de réception sur les sous-pixels (30, 30') d'au moins un macro-pixel (32a, 32b, 321-325).

12. Procédé selon la revendication 10 ou 11,
**caractérisé en ce qu'**un signal de détection d'objet, déterminé en fonction de la répartition du signal de réception sur les macro-pixels (32a, 32b, 321-325), est corrigé en raison de la répartition du signal de réception sur les méta-pixels (421-425).

13. Procédé selon la revendication 12,
**caractérisé en ce que** le signal de détection d'objet n'est engendré qu'en fonction de la répartition du signal de réception sur une pluralité de méta-pixels (421-425) pris en compte pour la détection d'objet.

14. Procédé selon l'une des revendications 10 à 13,
**caractérisé en ce que** le signal de détection d'objet est engendré et/ou corrigé en fonction de la position d'une caractéristique de la répartition du signal de réception.

15. Procédé selon l'une des revendications 10 à 14,
**caractérisé en ce que** le signal de détection d'objet est engendré sous forme de signal de sortie binaire en raison d'un objet (18a, 18b, 18c) qui se trouve à l'intérieur d'une distance de palpage prédéterminée.

16. Procédé selon la revendication 15,
**caractérisé en ce que** le signal de sortie binaire est une fonction de la position d'une caractéristique de la répartition du signal de réception sur les méta-pixels (421-425).

17. Procédé selon la revendication 15,
**caractérisé en ce que** deux distances et/ou deux plages de distance mutuellement complémentaires sont associées respectivement à un parmi deux méta-pixels (421-425), et
**en ce que** le signal de sortie binaire adopte un état en fonction du méta-pixel respectivement illuminé (421-425).

18. Procédé selon l'une des revendications 10 à 14,
**caractérisé en ce que** le signal de détection d'objet est engendré sous forme de signal de distance analogique et/ou numérique, qui est une mesure pour la distance de l'objet (18a, 18b, 18c) depuis l'agencement de réception et/ou depuis la source de lumière (12), et est une fonction de la position d'une caractéristique de la répartition du signal de réception.

19. Procédé pour le fonctionnement d'un dispositif selon la revendication 10,
**caractérisé en ce que** les signaux de réception fournis par un macro-pixel (32a, 32b, 321-325) sont pris en compte pour la détection d'objet si les sous-pixels (30, 30') du macro-pixel respectif (32a, 32b, 321-325) présentent une répartition de signal sensiblement symétrique, et **en ce que** les signaux de réception fournis par un macro-pixel (32a, 32b, 321-325) ne sont pas pris en compte ou ne sont pris en compte qu'après exécution d'une étape de correction pour la détection d'objet si les sous-pixels (30, 30') du macro-pixel respectif (32a, 32b, 321-325) présentent une répartition de signal sensiblement asymétrique.

20. Procédé selon la revendication 19,
**caractérisé en ce que** le signal de détection d'objet est déterminé en se basant sur une répartition du signal de réception sur une pluralité de macro-pixels (32a, 32b, 321-325) pris en compte pour la détection d'objets, et un signal d'un macro-pixel respectif (32a, 32b, 321-325) est déterminé par formation d'une somme sur ses sous-pixels (30, 30').

21. Procédé selon la revendication 19 ou 20,
**caractérisé en ce que** le signal de détection d'objet est engendré en fonction de la position d'une caractéristique de la répartition du signal de réception, déterminée sur une pluralité de macro-pixels (32a, 32b, 321-325) pris en compte pour la détection d'objet, à l'intérieur du réseau de pixels (28, 28').

22. Procédé selon la revendication 20 ou 21,
**caractérisé en ce que** le signal de détection d'objet est engendré sous forme de signal de sortie binaire en raison d'un objet (18a, 18b, 18c) qui se trouve à l'intérieur d'une distance de palpage prédéterminée, et le signal de sortie est une fonction de la position d'une caractéristique de la répartition du signal de réception à l'intérieur du réseau de pixels (28, 28').

23. Procédé selon la revendication 20 ou 21,
**caractérisé en ce que** le signal de détection d'objet est engendré sous forme de signal de distance analogique et/ou numérique en raison d'un objet détecté, et l'intensité du signal de distance est une mesure pour la distance de l'objet (18a, 18b, 18c) depuis l'agencement de réception et/ou depuis la source de lumière (12), et est une fonction de la position d'une caractéristique de la répartition du signal de réception à l'intérieur du réseau de pixels (28, 28').

24. Procédé selon l'une des revendications 19 à 23,
**caractérisé en ce que**, pendant la reconnaissance d'au moins un macro-pixel (32a, 32b, 321-325) avec une répartition du signal de réception sensiblement asymétrique sur les sous-pixels (30, 30'), le signal de détection d'objet conserve sa dernière valeur immédiatement avant la reconnaissance.

25. Procédé selon l'une des revendications 10 à 24,
**caractérisé en ce que** l'on détermine comme position de la caractéristique de la répartition du signal de réception la position du centre de gravité géométrique ou du maximum de la répartition du signal de réception.
